# EUROPÄISCHE PATENTSCHRIFT

(11) **EP 1 133 675 B1**
(45) Veröffentlichungstag und Bekanntmachung des Hinweises auf die Patenterteilung: **27.12.2006**
(21) Anmeldenummer: 99952362.4
(22) Anmeldetag: 11.08.1999
(51) Int. Cl.: G01C 21/36

(54) **NAVIGATIONSGERÄT UND NAVIGATIONSVERFAHREN**
NAVIGATION DEVICE AND NAVIGATION METHOD
DISPOSITIF ET PROCEDE DE NAVIGATION

(30) Priorität: 24.11.1998 DE 19854088
(43) Veröffentlichungstag der Anmeldung: 19.09.2001
(73) Patentinhaber: ROBERT BOSCH GMBH, 70442 Stuttgart (DE)
(72) Erfinder: RYCHLAK, Stefan, D-31241 Ilsede (DE)
(86) Internationale Anmeldenummer: PCT/DE1999/002509
(87) Internationale Veröffentlichungsnummer: WO 2000/031504

(56) Entgegenhaltungen:
- DE-A- 4 141 597
- DE-A- 19 631 591
- FR-A- 2 695 496
- PATENT ABSTRACTS OF JAPAN vol. 1998, no. 13, 30. November 1998 (1998-11-30) & JP 10 221104 A (SHARP CORP), 21. August 1998 (1998-08-21)

## Beschreibung

### Stand der Technik

Die Erfindung geht von einem Navigationsgerät zur Berechnung einer Fahrtroute von einem Start- zu mindestens einem Zielpunkt, sowie einem Navigationsverfahren zur Berechnung einer Fahrtroute von einem Start- zu mindestens einem Zielpunkt, nach der Gattung der unabhängigen Patentansprüche aus.

In Fortbewegungsmitteln, beispielsweise Kraftfahrzeugen, Flugzeugen oder Schiffen installierte Navigationssysteme leiten einen Führer des Fortbewegungsmittels durch optische oder akustische Ausgabe von Fahrtanweisungen schnell, einfach und sicher von einem aktuellen Standort zu einem gewünschten Zielort, ohne daß der Führer des Fortbewegungsmittels vor Fahrtantritt eine Route planen oder während der Fahrt den weiteren Routenverlauf anhand einer Karte nachvollziehen muß. Hierzu liegen entsprechende, beispielsweise auf Karten, Landkarten oder Straßenkarten basierende, Navigationsdaten in einem Speicher des Navigationsgeräts, vorzugsweise auf CD-ROM gespeichert vor. Das Navigationsgerät nutzt beispielsweise Fahrtstreckensensoren und einen Kompaß und gegebenenfalls zusätzlich die über Satelliten übertragenen Signale des GPS-(Global Positioning System)Systems, um einen momentanen Standort festzustellen und entsprechende Navigationsanweisungen zu berechnen, die zu einem vorbestimmten Ziel führen. Die Navigationsdaten beinhalten dabei vorzugsweise Daten über Straßen und Wege für Kraftfahrzeuge.

Bevor jedoch das Navigationssystem seine Aufgabe übernehmen und eine Route vom aktuellen Standort zum Zielort berechnen kann, ist es notwendig, daß ein Benutzer den gewünschten Zielort und gegebenenfalls auch den aktuellen Standort in das Navigationsgerät eingibt. Dies erfolgt beispielsweise über eine Tastatur oder ein ähnliches manuell zu betätigendes Eingabegerät.

Bei Navigationsgeräten gemäß dem Stand der Technik, beispielsweise bei Geräten der Firma Blaupunkt, erfolgt dabei die Eingabe des Zielortes in folgender Weise.

Zunächst wird für Fahrten beispielsweise im Inland der Orts- oder Städtename des Zielpunktes eingegeben, wozu durch Blättern im Alphabet, beispielsweise mittels einer Wipptaste bzw. Tastenwippe oder eines Drehknopfes, der erste Buchstabe des Städtenamens ausgewählt und anschließend bestätigt wird. Daraufhin erscheint an der Anzeigeeinheit des Navigationsgerätes eine Auswahlliste von Orts- bzw. Städtenamen, die mit dem eingegebenen Buchstaben beginnen. Zur weiteren Auswahl des Städtenamens ist es nun möglich, mittels Wipptasten in der vorliegenden Städtenamen-Liste zu blättern, bis der gewünschte Städtename aufgefunden worden ist, alternativ dazu ist es jedoch auch möglich, durch Eingabe des zweiten und gegebenenfalls weiterer Buchstaben in der oben beschriebenen Art und Weise den Städtenamen einzugeben.

In einem zweiten Schritt wird nun in analoger Weise der Straßenname des gewünschten Zielpunktes eingegeben.

Die oben beschriebene Eingabe des Zielortes erweist sich in der Praxis als zeitraubend und relativ umständlich.

Es wurde daher in der Patentanmeldung P 198 47 754.6 des Anmelders vorgeschlagen, die Zieleingabe für das Navigationsgerät durch Eingabe einer dem Zielort zugeordneten Telefonnummer zu realisieren. Dem liegt die Überlegung zugrunde, dass Compact-Discs (CD) mit Telefonlisten verfügbar sind, auf denen den jeweiligen Telefonnummern vollständige Adressen, also Städtenamen, Straßennamen und Hausnummer zugeordnet sind. Auf diese Weise lässt sich gemäß der oben genannten Anmeldung durch Eingabe einer Telefonnummer über eine Zehnertastatur des Navigationsgeräts ein Zielort für die Navigation eindeutig festlegen.

In einer weiteren Anmeldung DE-A-198 54 126 wird vorgeschlagen, das Navigationsziel mittels einer von dem Navigationsgerät lesbaren Chipkarte, auf der das Navigationsziel speicherbar ist, in das Navigationsgerät einzugeben. Diese Vorgehensweise ermöglicht beispielsweise die Programmierung des Navigationsziels auf die Chipkarte mittels eines zum Beschreiben einer Chipkarte geeigneten Personalcomputers, wobei hier zur Eingabe des Städte- und des Straßennamens des Zielortes beispielsweise auf die ohnehin vorhandene alphanumerische Tastatur des PCs zurückgegriffen werden kann.

Die DE-A-41 41 597 offenbart ein Verfahren zur Übertragung von Fahrplandaten zwischen einer die Fahrplandaten erstellenden und bereitstellenden Zentraleinheit und einem im Fahrzeug angeordneten Bordrechner zur Speicherung und Auswertung der Fahrplandaten zur Leitung des Fahrzeugführers. Bei den angesprochenen Fahrplandaten handelt es sich um anzufahrende Zielorte, eben in der Form eines Fahrplans oder um in der Zentrale vorberechnete Fahrtrouten, bei deren Abfahren die anzusteuernden Zielorte erreicht werden.

Die FR-A-2 695 496 offenbart ein Fahrzeugnavigationsgerät mit einem optischen Leser, wobei der optische Leser zur Erfassung von Ortsnamen codierenden Strichcodes ausgebildet ist. Somit können durch Abtasten eines entsprechenden Strichcodes Zielpunkte mittels des optischen Leser in das Navigationsgerät eingegeben werden.

### Vorteile der Erfindung

Das erfindungsgemäße Navigationsgerät und das erfindungsgemäße Navigationsverfahren mit den Merkmalen der unabhängigen Patentansprüche haben demgegenüber den Vorteil, daß zur Eingabe eines Navigationszielortes bzw. Zielpunktes die in den Chipkartenleser des Geräts eingesetzte Chipkarte zu ihrer Programmierung nicht mehr aus dem Chipkartenleser entnommen zu werden braucht, sondern die Zieleingabe bei in den Chipkartenleser eingesetzter Chipkarte erfolgt. Dies ist besonders dann von Vorteil, wenn die Chipkarte eine Multifunktionskarte ist, der neben der Zielorteingabe weitere Aufgaben zukommen. So kann beispielsweise dieselbe Chipkarte, wie z. B. von Autoradios der Firma Blaupunkt bekannt, auch als Diebstahlschutz eingesetzt werden, wobei auf der Chipkarte in digitaler Form ein Code gespeichert ist und das zu schützende Gerät nur bei eingelegter Chipkarte und als korrekt erkanntem Code betreibbar ist. Hier ermöglicht der Erfindungsgegenstand einen Weiterbetrieb des diebstahlgeschützten Geräts bei gleichzeitiger Navigations-Zieleingabe. Dies ist besonders z.B. bei solchen Navigationsgeräten von Vorteil, die, wie z.B. von den Geräten Typ "Bremen RCM 127" und "New York RCM 127" der Firma Blaupunkt bekannt, nicht als vollständig eigenständige Geräte, sondern in Verbindung mit Autoradiogeräten realisiert sind, und die über die Autoradio-Bedienelemente bedient werden und auf deren Anzeigevorrichtung oder Lautsprecher zur Ausgabe von Fahrtanweisungen zugreifen. In diesem Fall ist mit dem Erfindungsgegenstand, da die Chipkarte während der Fahrtzielprogrammierung im Chipkartenleser verbleibt, ein Weiterbetrieb des Autoradios auch während der Fahrtzielprogrammierung möglich.

Ein weiterer Vorteil des erfindungsgemäßen Geräts und des erfindungsgemäßen Verfahrens ist darin zu sehen, daß auf einfache Weise, d.h. ohne zusätzliche schaltungstechnische Änderungen am bestehenden Gerät, die Navigationszieleingabe bei einem über einen Chipkartenleser verfügenden Gerät durch Verwendung einer mit geeigneten Eingabemitteln verbundenen Chipkarte vereinfacht werden kann.

Weiterhin ist es von Vorteil, daß die Eingabemittel lösbar mit der Chipkarte verbunden sind, da damit nach Eingabe des Navigations-Zielortes die Eingabemittel ohne Beeinträchtigung der Funktionalität des Geräts entfernt werden können und erst zur nächsten Zielort-Eingabe wieder mit der Chipkarte verbunden werden müssen.

Von besonderem Vorteil ist es, wenn die Eingabemittel zur Eingabe eines Zielpunktes in Form eines optischen Eingabemediums, beispielsweise eines Strichcode-Lesers realisiert sind. In diesem Fall kann eine Zielort-Eingabe durch einfaches Einlesen eines Strichcodes beispielsweise einer Land- oder Straßenkarte oder von einem Strichcode-Etikett auf einem zuzustellenden Poststück in das Navigationsgerät programmiert werden. Ebenso ist es auch von Vorteil, wenn die Eingabemittel in Form einer geeigneten CCD-Kamera oder eines vergleichbaren optischen Eingabemittels realisiert sind, so daß durch Aufsetzen der Eingabemittel auf den Zielpunkt auf einer dafür geeigneten Landkarte der Navigations-Zielpunkt in die Navigationseinrichtung eingebbar ist.

Weiterhin ist es von Vorteil, wenn die Eingabemittel in Form eines Rechners, vorzugsweise eines Personalcomputers, realisiert sind, da dann eine einfache Programmierung des Zielortes unter Zuhilfenahme der bei einem PC zur Verfügung stehenden Eingabemittel, wie der ohnehin vorhandenen alphanumerischen Tastatur, durchführbar ist. Ebenso ist es auch von Vorteil, wenn der Zielpunkt durch Positionierung eines Zeigers auf einer auf dem Computer-Bildschirm dargestellten Landkarte mittels einer sogenannten Computer-Maus auswählbar und in das Navigationsgerät eingebbar ist, da auch dieses Eingabeverfahren gegenüber dem vom Stand der Technik her bekannten Eingabeverfahren wesentlich einfacher und komfortabler ist.

Weiterhin ist es von Vorteil, daß eine Anzeigevorrichtung zur Anzeige des eingegebenen Zielpunktes vorgesehen ist, da damit eine einfache und schnelle Überprüfung dahingehend gewährleistet ist, ob der in das Navigationsgerät eingegebene Zielort auch tatsächlich dem gewünschten Navigationsziel entspricht. Dies ist beispielsweise dann von besonderer Bedeutung, wenn das Navigationsgerät über ein optisches Eingabemedium in Form eines Strichcode-Lesers verfügt, und dieser in Verbindung mit beispielsweise verschmutzten Strichcode-Etiketten unter Umständen zweifelhafte Ergebnisse liefert. Ebenso ist es auch von Vorteil, wenn auf der Anzeige des erfindungsgemäßen Navigationsgeräts Fahrtanweisungen, beispielsweise in Form eines Richtungspfeils und einer Entfernungsangabe optisch dargestellt werden, da damit dem Fahrzeugführer auch bei hohem Umgebungsgeräuschpegel, der zu einer möglichen Verdeckung akustisch wiedergegebener Fahrtanweisungen führt, Fahrtanweisungen klar verständlich gemacht werden können.

Ein weiterer Vorteil ergibt sich dann, wenn mittels der Eingabemittel eine Mehrzahl von anzufahrenden Fahrtzielen in das Navigationsgerät eingebbar ist, da dann eine hinsichtlich Fahrtkosten, Fahrtstrecke oder Fahrtzeit optimierte Fahrtroute berechenbar ist. Dies ist besonders beim Einsatz des erfindungsgemäßen Navigationsgeräts in einem Zustellfahrzeug für Stückgut, beispielsweise einem Paketdienst, von Vorteil, bei dem während oder vor dem Beladen des Fahrzeugs mit zuzustellendem Stückgut beispielsweise mittels eines Strichcode-Lesers Strichcode-Etiketten, die den Zustellungsort in verschlüsselter Form enthalten, eingelesen werden, so daß unmittelbar nach der vollständigen Beladung des Fahrzeugs automatisch eine optimale Fahrtroute berechnet werden kann.

### Zeichnungen

Ausführungsbeispiele der Erfindungen sind in den Figuren dargestellt und werden in der nachfolgenden Beschreibung näher erläutert.

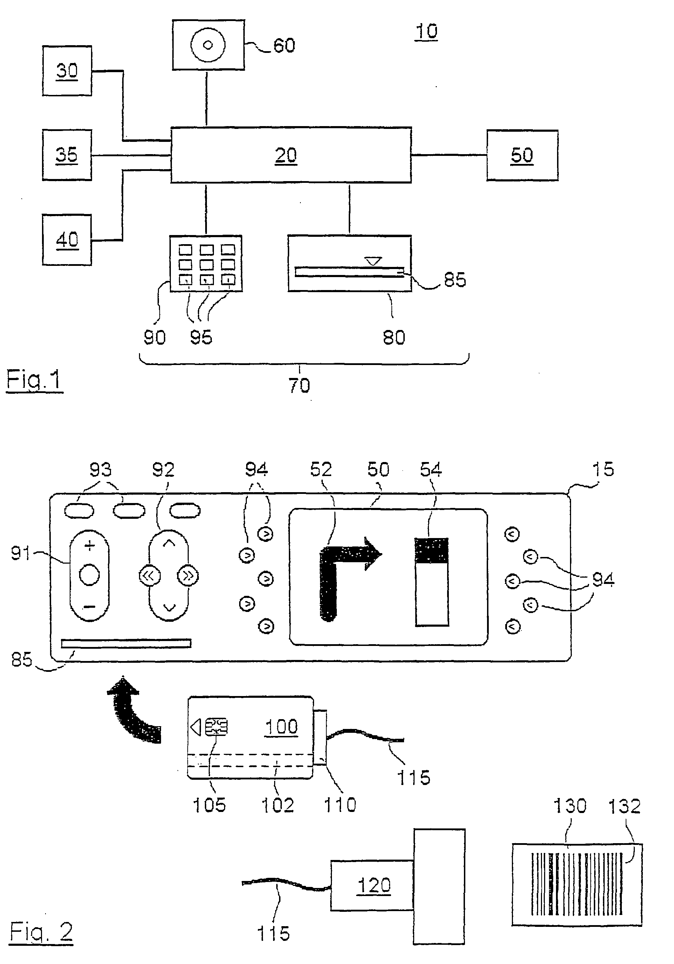

Es zeigen Figur 1 ein Blockschaltbild eines erfindungsgemäßen Navigationsgeräts und Figur 2 die wesentlichen Elemente eines Ausführungsbeispiels der Erfindung.

### Beschreibung der Ausführungsbeispiele

Figur 1 zeigt ein Blockschaltbild eines ersten Ausführungsbeispiels des erfindungsgemäßen Navigationsgeräts.

An die Gerätesteuerung 20 des erfindungsgemäßen Navigationsgeräts 10, die unter anderem auch den eigentlichen Navigationsrechner umfaßt, sind zum einen Mittel 30, 35, 40 angeschlossen, die Informationen über den Standort, die Bewegungsrichtung und den Bewegungszustand des Fahrzeugs abgeben. Beim vorliegenden Ausführungsbeispiel handelt es sich dabei um einen Kompaß 30, einen Wegstreckenmesser 35 und einen GPS-Empfänger 40.

Weiterhin ist an die Steuerung 20 ein Speicher 60 angeschlossen, in dem Informationen einer Land- bzw. Straßenkarte in digitaler Form gespeichert sind. Beim vorliegenden Ausführungsbeispiel ist der Speicher 60 in Form eines CD-ROM-Laufwerks mit eingelegter CD-ROM als Datenträger für die Landkarteninformationen realisiert. Ebenso kann es jedoch auch vorgesehen sein, daß der Speicher 60 in Form eines RAM- bzw. ROM-Halbleiterspeichers realisiert ist.

Weiterhin ist an die Steuerung 20 eine Ausgabeeinheit 50 angeschlossen, bei der es sich im vorliegenden Fall um eine Anzeigevorrichtung handelt. Ebenso ist es jedoch auch möglich, daß ergänzend oder alternativ zur optischen Anzeige die Ausgabevorrichtung 50 eine akustische Ausgabevorrichtung umfaßt.

Schließlich ist an die Steuerung eine Eingabeeinheit 70 mit einer Drucktasten 95 oder andere Eingabemittel, wie z. B. Drehknöpfe, umfassenden Tastatur 90 und einem Chipkartenleser 80 mit einem Kartenschacht 85 zur Aufnahme einer auszuwertenden Chipkarte zur Eingabe eines Navigations-Zielpunktes angeschlossen.

Figur 2 zeigt ein konkretes Ausführungsbeispiel des erfindungsgemäßen Navigationsgeräts nach Figur 1.

Dargestellt ist zum einen die Frontkappe eines Autoradios 15, über dessen Bedienelemente 91, 92, 93, 94 das erfindungsgemäße Navigationsgerät bedient wird und an dessen Anzeige 50 Fahrtanweisungen, im vorliegenden Fall in Form eines Richtungspfeils 52 und einer Restentfernungsanzeige 54, dargestellt werden. Die Autoradiokappe umfaßt Bedienelemente in Form von einfachen Drucktasten 93, 94 und ein- bzw. zweidimensionalen Wipptasten 91, 92. Des weiteren verfügt das Autoradio über einen Chipkartenleser 80, der in der Zeichnung in Form des Kartenschachtes 85 zur Aufnahme einer Chipkarte dargestellt ist.

In den Chipkartenleser, bzw. den Kartenschacht 85 des Chipkartenlesers 80 ist eine Chipkarte 100 einführbar, wobei die auf der Chipkarte gespeicherten Informationen über das Kontaktfeld 105 der Chipkarte bzw. den Magnetstreifen 102 der Chipkarte vom Chipkartenleser 80 auswertbar sind.

Unter dem Begriff Chipkarte sind dabei im Zusammenhang mit der vorliegenden Erfindung nicht nur Chipkarten im engeren Sinne, also solche Karten, die einen Mikrochip enthalten, zu verstehen. Vielmehr sind damit im Sinne einer erweiterten Definition solche chipkartenförmigen Karten gemeint, die als Datenträger allgemein, bzw. entsprechend dem Gegenstand der vorliegenden Erfindung als Mittel zur Datenübertragung von einer Informationserfassungseinrichtung, wie z. B. einem Strichcodeleser, oder einer Informationen erzeugenden Einheit, wie z. B. einem Personalcomputer, zu einem Empfänger, also als eine Art Adapter ausgeführt sind. Dieses chipkartenförmige Adapter umfaßt, wie angedeutet, beispielsweise eine Kontaktfläche 105, die bei in einen Chipkartenleser eingelegter Chipkarte mit Gegenkontakten des Chipkartenlesers in Verbindung stehen. Alternativ können andere Verbindungsarten zwischen Chipkarte und Chipkartenleser, wie beispielsweise ein mittels der Informationen magnetisierbarer Magnetstreifen auf der Chipkarte und ein entsprechender Magnetstreifenleser im Chipkartenleser vorgesehen sein.

Über einen Steckkontakt 110 und ein daran angeschlossenes Kabel 115 ist an die Chipkarte 100 ein optisches Eingabemittel 120 in Form eines Strichcode-Lesers für Strichcode-Etiketten 130, auf denen ein Strichcode 132 aufgedruckt ist, angeschlossen.

Das erfindungsgemäße Navigationsgerät sowie das erfindungsgemäße Navigationsverfahren funktionieren wie folgt.

Nach Einschalten des Navigationsgeräts 10 liefern die Sensoren 30, 35, 40, nämlich der Wegstreckenmesser 30, der Kompaß 35 und der GPS-Empfänger 40 Informationen, aus denen die Steuerung bzw. der in der Steuerung enthaltene Navigationsrechner die aktuelle Position des Fahrzeugs, in das das erfindungsgemäße Navigationsgerät eingebaut ist, ermittelt. Gegebenenfalls berücksichtigt die Steuerung dabei im Sinne einer Plausibilitätsprüfung auch Daten aus der im Speicher 60 abgelegten Straßenkarte zur Korrektur der aufgrund der Sensordaten berechneten Fahrzeugposition.

Zur Eingabe eines Navigations-Zielpunktes wird die Chipkarte 100 in den Kartenschacht 85 des erfindungsgemäßen Navigationsgeräts 10 bzw. Autoradios 15 eingesetzt, so daß die Steuerung bzw. der Navigationsrechner über im Kartenschacht 85 angeordnete Gegenkontakte des Chipkartenlesers über das Kontaktfeld 105 oder den Magnetstreifen 102 der Chipkarte auf die auf der Chipkarte verfügbaren Informationen zugreift. Mittels eines über den Steckkontakt 110 an die Chipkarte angeschlossenen Strichcode-Lesers 120 werden nun die Informationen, die im Strichcode 132 eines Etiketts 130 enthalten sind, über die Chipkarte 100 und den Chipkartenleser 80 in das Navigationsgerät 10 eingelesen.

Optional ist es vorgesehen, daß nach Einlesen eines Strichcodes darin enthaltene Information über den Zielpunkt an der Anzeigeeinheit 50, beispielsweise in Form eines Städte- und eines Straßennamens, angezeigt wird. Die eingelesene Zielpunktinformation wird dann erst nach Bestätigung oder gegebenenfalls Korrektur durch den Benutzer in den Zielspeicher des Navigationsgeräts übernommen.

Daraufhin berechnet die Steuerung 20 aus den Informationen über die aktuelle Position des Fahrzeugs, über den Zielpunkt und unter Zuhilfenahme der im Speicher 60 abgelegten Karteninformationen eine Fahrtroute. Aufgrund der jeweils aktuell bestimmten Fahrzeugposition und der berechneten Fahrtroute erzeugt das Navigationssystem 10 während der Fahrt des Fahrzeugs bzw. Fortbewegungsmittels Fahrtanweisungen für den Benutzer bzw. denn Fahrzeugführer, die über die Ausgabevorrichtung 50 ausgegeben werden. Bei den ausgegebenen Fahrtanweisungen handelt es sich um akustische Fahrtanweisungen, die über die an das Autoradio 15 angeschlossenen, in der Zeichnung nicht dargestellten Lautsprecher ausgegeben werden, sowie um optisch auf der Anzeige 50 dargestellte Fahrtanweisungen in Form beispielsweise eines Richtungspfeils 52 und einer Restentfernungsanzeige 54, die die zurückzulegende Fahrtstrecke bis zum durch den Richtungspfeil angezeigten Abbiegevorgang anzeigt.

Während beim ersten Ausführungsbeispiel der Erfindung die Eingabemittel zur Eingabe eines Zielpunktes in das Navigationsgerät 10 in Form eines Strichcode-Lesers 120 realisiert waren, ist es bei einem weiteren Ausführungsbeispiel der Erfindung vorgesehen, daß die Eingabemittel in Form eines anderen optischen Eingabemediums, beispielsweise einer CCD-Kamera ausgeführt sind. Bei diesem Ausführungsbeispiel ist es vorgesehen, daß zur Navigations-Zieleingabe die CCD-Kamera auf den Zielort, der auf einer dafür geeigneten Landkarte eingetragen ist, aufgesetzt wird. Die Steuerung 20 des erfindungsgemäßen Navigationsgeräts berechnet darauf unter Zuhilfenahme der im Speicher 60 abgelegten Karteninformationen aus dem mittels der CCD-Kamera aufgenommenen Kartenausschnitt den Navigations-Zielpunkt und zeigt diesen, beispielsweise in Form eines Städte- und Straßennamens auf der Anzeige 50 des Navigationsgeräts 20 bzw. des Autoradios 15 an. Stimmt der auf diese Weise eingegebene Zielpunkt mit dem vom Benutzer gewünschten Zielpunkt überein, so kann eine Bestätigung des Zielpunktes durch den Benutzer, beispielsweise durch Betätigen einer Taste 95 an der Tastatur 90 des Navigationsgeräts 10 bzw. einer dafür vorgesehenen Taste 93 des Autoradios 15 bestätigt werden. Andernfalls kann, ebenfalls durch Betätigen einer entsprechenden Taste, der erkannte Zielpunkt verworfen und ein erneutes Einlesen des Zielpunktes oder eine anderweitige Korrektureingabe durch den Benutzer veranlaßt werden.

Bei einem weiteren Ausführungsbeispiel der Erfindung ist es vorgesehen, daß die Eingabemittel 120 zur Eingabe des Zielpunktes in Form eines Rechners mit daran angeschlossener Tastatur ausgeführt sind. In diesem Fall wird die in den Kartenschacht 85 des Chipkartenlesers 80 des erfindungsgemäßen Geräts 10 eingelegte Chipkarte 100 mittels eines Steckkontaktes 10 über ein Kabel 115 mit dem Rechner verbunden. Anschließend erfolgt über die alphanumerische Tastatur des Rechners die Eingabe des Zielpunktes im Klartext. Auch in diesem Fall wird über die Anzeige 50 des erfindungsgemäßen Geräts der eingegebene Zielpunkt angezeigt, wodurch dem Benutzer eine Überprüfung des eingegebenen Zielpunkts ermöglicht wird.

Alternativ zur Eingabe des Zielpunktes über die alphanumerische Tastatur des Rechners kann diese aber auch mittels einer Computer-Maus durch Markieren eines Zielortes auf einer am Computer-Bildschirm angezeigten Land- bzw. Straßenkarte erfolgen.

Gemäß einem weiteren Ausführungsbeispiel der Erfindung ist das erfindungsgemäße Navigationsgerät erfindungsgemäß zur Verwendung in einem Zustellfahrzeug, insbesondere für Stückgut, beispielsweise einen Paketzusteller, vorgesehen. Erfindungsgemäß ist es vorgesehen, daß das zuzustellende Stückgut mit einem Etikett 130 versehen wird, auf das ein Strichcode 132 aufgedruckt ist, der wiederum in codierter Form die Zustelladresse für das zuzustellende Stückgut enthält. Vor oder während der Beladung des Zustellfahrzeuges mit dem zuzustellenden Stückgut wird nun die Zustelladresse mittels des Strichcode-Lesers 120 als Navigations-Zielpunkt in das erfindungsgemäße Navigationsgerät 10, das im Zustellfahrzeug installiert ist, eingelesen. Nach Einlesen der Zustelladressen sämtlicher zuzustellender Stückgut-Stücke berechnet die Steuerung 20 des Navigationsgeräts 10 aus dem aktuellen Fahrzeugstandort eine Route, die sämtliche eingegebenen Zustelladressen als Ziel- bzw. Zwischenzielpunkte berücksichtigt. Durch Verwendung eines geeigneten, unter dem Namen Längster-Pfad-Algorhitmus bekannten Algorhitmusses wird dabei die Fahrtroute derart berechnet, daß die benötigte Fahrtzeit, die zurückgelegte Fahrtstrecke oder die Fahrtkosten minimiert werden.

Dabei liegt es im Rahmen der vorliegenden Erfindung, daß beispielsweise zur Minimierung der Fahrtzeit, und damit letztlich auch der Fahrtkosten, aktuelle Hinweise über Verkehrsstörungen, die z. B. über den sogenannten Traffic Message Channel (TMC) innerhalb des Radio Daten Systems (RDS) von Rundfunkanstalten bzw. -sendern gesendet werden, bei der Routenberechnung, z. B. durch Einplanen einer Stauumfahrung, berücksichtigt werden.

Ebenso ist es auch möglich, daß z. B. Verkehrsprognosen, z. B. über Staus auf Hauptzufahrtsstraßen zu Städten oder Ballungsgebieten zu den Hauptverkehrszeiten, bei der Routenberechnung derart berechnet werden, daß solche Strecken vorwiegend in den Nebenverkehrszeiten eingeplant werden, in denen erwartungsgemäß Staus mit geringerer Wahrscheinlichkeit auftreten.

## Patentansprüche

1. Navigationsgerät mit einer Steuerung zur Berechnung einer Fahrtroute von einem Start- zu mindestens einem Zielpunkt und mit einer Eingabeeinheit zur Eingabe mindestens eines Zielpunktes, die einen Chipkartenleser (80) zur Auswertung einer Chipkarte (100) umfasst,
**dadurch gekennzeichnet,**
**dass** zur Eingabe des mindestens einen Zielpunkts
- die Eingabeeinheit (70) dazu ausgebildet ist, über eine durch den Chipkartenleser (80) kontaktierte Chipkarte (100) eine Verbindung zu einem Eingabemittel (120) herzustellen,
- die Eingabeeinheit (70) ferner dazu ausgebildet ist, den mindestens einen Zielort von dem mit der Chipkarte (80) verbundenen Eingabemittel (120) über die Chipkarte (80) einzulesen.

2. Navigationsgerät nach Anspruch 1, **dadurch gekennzeichnet,**
**daß** die Eingabemittel in Form eines optischen Eingabemediums, vorzugsweise eines Strichcodelesers (120), ausgeführt sind.

3. Navigationsgerät nach Anspruch 1, **dadurch gekennzeichnet,**
**daß** die Eingabemittel (120) in Form eines Rechners mit daran angeschlossener Tastatur ausgeführt ist.

4. Navigationsgerät nach einem der vorhergehenden Ansprüche, **dadurch gekennzeichnet,**
**daß** eine Anzeigevorrichtung (50) zur Anzeige des Zielpunktes und/oder zur Ausgabe von Fahrtanweisungen (52, 54) vorgesehen ist.

5. Navigationsgerät nach einem der vorhergehenden Anprüche, **dadurch gekennzeichnet,**
**daß** eine akustische Ausgabe (50) von Fahrtanweisungen vorgesehen ist.

6. Navigationsverfahren zur Berechnung einer Fahrtroute von einem Start zu mindestens einem Zielpunkt, wobei der mindestens eine Zielpunkt über eine einen Chipkartenleser umfassende Eingabeeinheit eingegeben wird,
**dadurch gekennzeichnet,**
**daß** zur Eingabe des mindestens einen Zielpunktes eine Chipkarte (100) mit daran angeschlossenen Eingabemitteln (120) in den Chipkartenleser (80) eingelegt wird und über die Eingabemittel (120) die Eingabe des mindestens einen Zielpunktes erfolgt.

7. Navigationsverfahren nach Anspruch 6, **dadurch gekennzeichnet,**
**daß** nach Eingabe einer Mehrzahl von Zielpunkten eine ideale Fahrtroute, insbesondere im Sinne einer Fahrtkosten-, Fahrtzeit- oder Fahrtstreckenminimierung, berechnet wird, die alle aus der Mehrzahl von Zielpunkten enthält.

8. Verwendung eines Navigationsgeräts nach einem der vorhergehenden Ansprüche 1 bis 5 in einem Zustellfahrzeug, insbesondere für Stückgut,
wobei das zuzustellende Stückgut während oder vor der Beladung des Zustellfahrzeugs mit einer Zustelladresse, insbesondere in codierter Form in Form eines Strichcode-Aufklebers (130), versehen wird, und daß während oder vor der Beladung des Zustellfahrzeugs die Zustelladressen als Zielpunkte mittels der Eingabemittel (120) in das Navigationsgerät (10) eingegeben werden.

9. Verwendung eines Navigationsgeräts nach Anspruch 8,
wobei nach Eingabe der durch das Zustellfahrzeug anzufahrenden Zielpunkte eine, insbesondere im Sinne einer Fahrtkosten-, Fahrtzeit- oder Fahrtstreckenminimierung, optimierte Fahrtroute berechnet wird.

## Claims

1. Navigation appliance having a controller for calculating a journey route from a starting point to at least one destination and having an input unit for inputting at least one destination which comprises a chip card reader (80) for evaluating a chip card (100), **characterized**
**in that** for the purpose of inputting the at least one destination
- the input unit (70) is designed to use a chip card (100) which is in contact with the chip card reader (80) in order to set up a connection to an input means (120),
- and the input unit (70) is designed to read in the at least one destination from the input means (120), connected to the chip card (80), using the chip card (80).

2. Navigation appliance according to Claim 1, **characterized**
**in that** the input means are in the form of an optical input medium, preferably a bar code reader (120).

3. Navigation appliance according to Claim 1, **characterized**
**in that** the input means (120) is in the form of a computer with a keyboard connected to it.

4. Navigation appliance according to one of the preceding claims, **characterized**
**in that** an indicator apparatus (50) is provided for indicating the destination and/or for outputting driving instructions (52, 54).

5. Navigation appliance according to one of the preceding claims, **characterized**
**in that** an audible output (50) is provided for driving instructions.

6. Navigation method for calculating a journey route from a starting point to at least one destination, where
the at least one destination is input using an input unit which comprises a chip card reader,
**characterized**
**in that** the at least one destination is input by inserting a chip card (100) with input means (120) connected to it into the chip card reader (80) and using the input means (120) to input the at least one destination.

7. Navigation method according to Claim 6, **characterized**
**in that** input of a plurality of destinations is followed by calculation of an ideal journey route, particularly from the point of view of minimizing travel costs, travel time or travel distance, which contains all from the plurality of destinations.

8. Use of a navigation appliance according to one of the preceding Claims 1 to 5 in a delivery vehicle, particularly for piece goods,
where the piece goods to be delivered are provided with a delivery address, particularly in encoded form in the form of a bar code sticker (130), while or before the delivery vehicle is loaded, and where the delivery addresses are input into the navigation appliance (10) as destinations using the input means (120) while or before the delivery vehicle is loaded.

9. Use of a navigation appliance according to Claim 8,
where input of the destinations to which the delivery vehicle is to drive is followed by calculation of an optimized journey route, particularly from the point of view of minimizing travel costs, travel time or travel distance.

## Revendications

1. Appareil de navigation comportant une commande pour calculer un trajet entre un point de départ et au moins un point de destination et comportant une unité d'entrée pour introduire au moins un point de destination, cette unité ayant un lecteur de carte à puce (80) pour exploiter une carte à puce (100),
**caractérisé en ce que**
pour introduire au moins un point de destination :
- l'unité d'entrée (70) est réalisée pour établir une liaison vers un moyen d'entrée (120) par une carte à puce (100) mise en contact par le lecteur de carte à puce (80), et
- l'unité d'entrée (70) est en outre réalisée pour lire au moins un point de destination du moyen d'entrée (120) relié à la carte à puce (80) par l'intermédiaire de la carte à puce (80).

2. Appareil de navigation selon la revendication 1,
**caractérisé en ce que**
les moyens d'entrée sont réalisés sous la forme d'un milieu d'entrée optique, de préférence d'un lecteur de code à barres (120).

3. Appareil de navigation selon la revendication 1,
**caractérisé en ce que**
les moyens d'entrée (120) sont réalisés sous la forme d'un calculateur auquel est relié un clavier.

4. Appareil de navigation selon l'une quelconque des revendications précédentes,
**caractérisé par**
un dispositif d'affichage (50) pour afficher le point de destination et/ou pour émettre des indications de guidage (52, 54).

5. Appareil de navigation selon l'une des revendications précédentes,
**caractérisé par**
une émission acoustique (50) pour les indications de guidage.

6. Procédé de navigation pour calculer un trajet entre un point de départ et au moins un point de destination, selon lequel on introduit au moins un point de destination par une unité d'entrée comportant un lecteur de carte à puce,
**caractérisé en ce que**
pour introduire au moins un point de destination on place la carte à puce (100) et les moyens d'entrée raccordés (120) dans le lecteur de carte à puce (80) et par les moyens d'entrée (120) on introduit au moins un point de destination.

7. Procédé de navigation selon la revendication 6,
**caractérisé en ce qu'**
après avoir introduit plusieurs points de destination on calcule un trajet idéal, notamment selon les paramètres de coût minimum du trajet, durée minimale du trajet et distance minimale parcourue pour l'ensemble des points de destination.

8. Application d'un appareil de navigation selon l'une des revendications précédentes 1 à 5 à un véhicule de livraison, notamment pour des colis, les colis à livrer étant munis pendant ou avant d'être chargés dans le véhicule d'une adresse de destination, notamment sous forme codée avec une étiquette à code barres (130) et pendant ou avant le chargement du véhicule de livraison on introduit les adresses de livraison comme points de destination dans l'appareil de navigation (10) à l'aide des moyens d'entrée (120).

9. Utilisation d'un appareil de navigation selon la revendication 8, selon lequel après avoir entré les points de destination que doit atteindre le véhicule de livraison, on calcule un trajet optimisé, notamment du point de vue du coût minimum, du temps minimum ou de la distance minimale.
